# EUROPEAN PATENT APPLICATION

(11) **EP 4 207 951 A1**
(43) Date of publication of application: **05.07.2023**
(21) Application number: 22164014.7
(22) Date of filing: 24.03.2022
(51) Int. Cl.: H05B 45/59, H05B 45/30

(54) **LED LIGHTING DEVICE DRIVER WITH IMPROVED LUMINOUS PERFORMANCE AND METHOD THEREOF**

(30) Priority: 31.12.2021 CN 202111666872
(71) Applicant: Xiamen PVTECH Co., Ltd., Xiamen Fujian (CN)
(72) Inventor: Lu, Fuxing, Xiamen (CN); Lin, Zhirong, Xiamen (CN)
(74) Representative: Lang, Christian

(57) **Abstract**

A light-emitting diode (LED) lighting device driver with improved luminous performance is provided, which includes a driving circuit and a current ripple reduction circuit. The driving circuit outputs a driving current. The current ripple reduction circuit receives the driving current and reduces the current ripple of the driving current to generate an output current in order to drive a light-emitting module. The current ripple reduction can effectively depress the current ripple of the driving current outputted from the driving circuit in order to generate the output current and then drive the light-emitting module by the output current. Thus, the luminous performance of the light-emitting module can be significantly improved with a view to achieve energy saving and conform to environmental protection requirements.

## Description

### TECHNICAL FIELD

The present invention relates to a light-emitting diode (LED) lighting device driver, in particular to a LED lighting device driver with improved luminous performance. The present invention further relates to a method for improving the luminous performance of LED lighting device drivers.

### BACKGROUND

There has been a general awareness about environmental protection in recent years, so energy saving has become the common target of all industries. In order to achieve energy saving, all lighting device manufacturers strive to improve the luminous performance of lighting devices so as to reduce the input power without deceasing the total luminous flux.

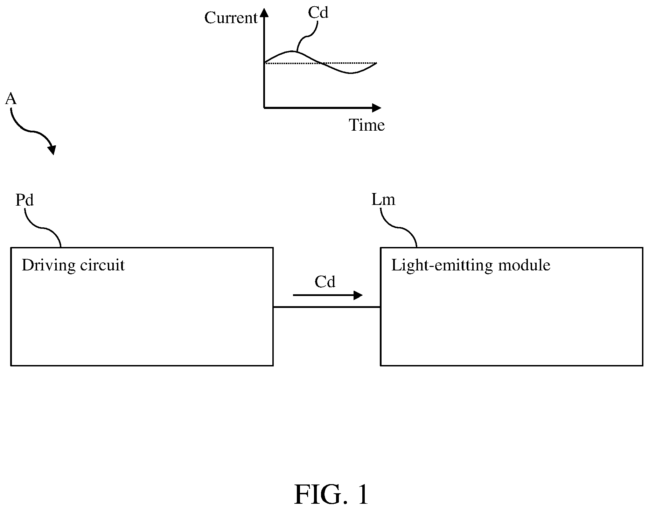

Please refer to FIG. 1, which is a circuit diagram of a currently available light-emitting diode (LED) lighting device. As shown in FIG. 1, the LED lighting device A includes a driving circuit Pd and a light-emitting module Lm. The light-emitting module Lm is a LED. The driving circuit Pd outputs a driving current Cd to drive the light-emitting module Lm. The driving current Cd outputted by the driving circuit Pd may include current ripple, such that the driving current Cd fluctuates around the rating current (I_{RMS}), which significantly deceases the luminous performance of the light-emitting module Lm.

In general, the increase of the output power of the LED lighting device A would decrease the luminous performance thereof.

### SUMMARY

The present invention is related to a light-emitting diode (LED) lighting device driver with improved luminous performance. In one embodiment of the present invention, the LED lighting device driver includes a driving circuit and a current ripple reduction circuit. The driving circuit outputs a driving current. The current ripple reduction circuit receives the driving current and reduces the current ripple of the driving current to generate an output current in order to drive a light-emitting module. The current ripple reduction can effectively depress the current ripple of the driving current outputted from the driving circuit in order to generate the output current and then drive the light-emitting module by the output current. Therefore, the luminous performance of the light-emitting module can be significantly improved with a view to achieve energy saving and conform to environmental protection requirements.

In one embodiment, the current ripple reduction circuit includes a filter capacitor.

In one embodiment, the current ripple reduction circuit is a flicker reduction circuit.

In one embodiment, the light-emitting module is a LED, a LED array or other similar elements.

In one embodiment, the driving circuit is connected to a power source and receives the electrical energy outputted from the power source in order to generate the driving current.

The present invention is further related to a method for improving luminous performance of a LED lighting device. In one embodiment of the present invention, the method includes the following steps: outputting a driving current by a driving circuit; receiving the driving current and reducing the current ripple of the driving current by a current ripple reduction circuit in order to generate an output current; and emitting the light by a light-emitting module after the light-emitting module receives the output current.

In one embodiment, the method further includes the following step: receiving the electrical energy outputted from a power source by the driving circuit so as to generate the driving current.

In one embodiment, the current ripple reduction circuit includes a filter capacitor.

In one embodiment, the current ripple reduction circuit is a flicker reduction circuit.

In one embodiment, the light-emitting module is a LED, a LED array or other similar elements.

The LED lighting device driver with improved luminous performance and method thereof in accordance with the embodiments of the present invention may have the following advantages:
(1) In one embodiment of the present invention, the LED lighting device driver includes a current ripple reduction circuit, which can effectively decrease or filer out the current ripple of the driving current outputted by the driving circuit thereof so as to generate the output current for driving the light-emitting module thereof. Accordingly, the luminous performance of the LED lighting device driver can be dramatically improved with a view to achieve energy saving and satisfy environmental protection requirements.
(2) In one embodiment of the present invention, the LED lighting device driver can be applied to various currently available LED lighting devices in order to enhance the luminous performances of these currently available lighting devices. Thus, the application of the LED lighting device driver can be more comprehensive.
(3) In one embodiment of the present invention, the current ripple reduction circuit of the LED lighting device driver can be realized by a filter capacitor, a flicker reduction circuit or other similar circuits. Therefore, the circuit design thereof can be flexible, which can effectively conform to actual requirements.
(4) In one embodiment of the present invention, the current ripple reduction circuit of the LED lighting device driver can be integrated with other functional circuits. Therefore, the performance of the LED lighting device can be further enhanced in order to satisfy the requirements of different users.
(5) In one embodiment of the present invention, the LED lighting device driver can greatly increase the luminous performance of the LED lighting device by a simple circuit design so as to achieve the desired technical effects without significantly increasing the cost thereof. Accordingly, the LED lighting device driver can have high commercial value.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a circuit diagram of a currently available light-emitting diode (LED) lighting device.
FIG. 2 is a block diagram of a LED lighting device driver with improved luminous performance in accordance with one embodiment of the present invention.
FIG. 3 is a flow chart of a method for improving luminous performance of a LED lighting device in accordance with one embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

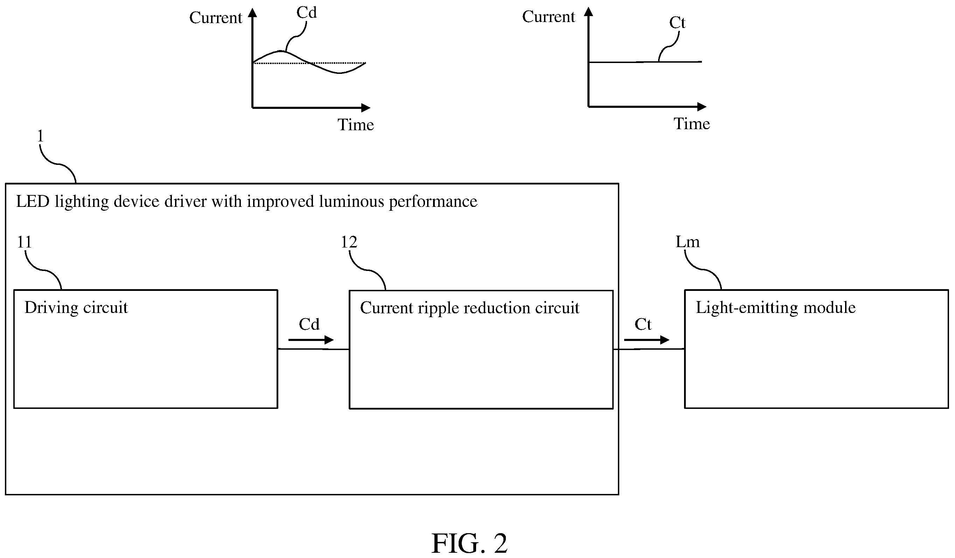

Please refer to FIG. 2, which is a block diagram of a light-emitting diode (LED) lighting device driver with improved luminous performance in accordance with one embodiment of the present invention. As shown in FIG. 2, the LED lighting device driver 1 includes a driving circuit 11 and a current ripple reduction circuit 12.

The driving circuit 11 is connected to a power source (not shown in the drawings) and the current ripple reduction circuit 12. The driving circuit 11 receives the electrical energy outputted from a power source (e.g., utility power) to generate a driving current Cd and outputs the driving current Cd to the current ripple reduction circuit 12.

The current ripple reduction circuit 12 is connected to a light-emitting module Lm. In one embodiment, the light-emitting module Lm may be a LED, a LED array or other slimier elements. The current ripple reduction circuit 12 receives the driving current Cd and reduces the current ripple of the driving current Cd to generate an output current Ct. Then, the current ripple reduction circuit 12 outputs the output current Ct to the light-emitting module Lm in order to drive the light-emitting module Lm. In one embodiment, the current ripple reduction circuit 12 may be a flicker reduction circuit, a filter capacitor or other similar circuits. As shown in FIG. 2, the driving current Cd includes the current ripple and the current ripple reduction circuit 12 can decrease or filter out the current ripple from the driving current Cd so as to generate the output current Ct without the current ripple or the output current Ct with reduced current ripple.

As set forth above, the current ripple circuit 12 can be realized by a flicker reduction circuit, a filter capacitor or other similar circuits. Therefore, the circuit design of the current ripple reduction circuit 12 can be very flexible. The user can design the current ripple reduction circuit 12 according to different applications, such that the function of the current ripple reduction circuit 12 can correspond with actual requirements.

In addition, the circuit design of the current ripple reduction circuit 12 can be applied to various currently available LED lighting devices in order to effectively enhance the luminous performances of these lighting devices. Thus, the application of the LED lighting device driver 1 can be more comprehensive.

Further, the circuit design of the current ripple reduction circuit 12 of the LED lighting device driver 1 can be integrated with a color temperature adjustment circuit, a dimming circuit or other functional circuits. Accordingly, the performance of the LED lighting device having the LED lighting device driver 1 can be further improved with a view to conform to the requirements of different users.

Via the above circuit design of the LED lighting device driver 1, the luminous performance of the light-emitting module Lm can be significantly improved. As a result, the overall luminous performance of the LED lighting device having the LED lighting device driver 1can be effectively enhanced in order to achieve energy saving and conform to environmental protection requirements.

The embodiment just exemplifies the present invention and is not intended to limit the scope of the present invention; any equivalent modification and variation according to the spirit of the present invention is to be also included within the scope of the following claims and their equivalents.

It is worthy to point out that the driving current outputted by the driving circuit of a currently available LED lighting device may include current ripple, such that the driving current fluctuates around the rating current (I_{RMS}), which significantly deceases the luminous performance of the LED lighting device. On the contrary, according to one embodiment of the present invention, the LED lighting device driver includes a current ripple reduction circuit, which can effectively decrease or filer out the current ripple of the driving current outputted by the driving circuit thereof so as to generate the output current for driving the light-emitting module thereof. Accordingly, the luminous performance of the LED lighting device driver can be dramatically improved with a view to achieve energy saving and satisfy environmental protection requirements.

In addition, according to one embodiment of the present invention, the LED lighting device driver can be applied to various currently available LED lighting devices in order to enhance the luminous performances of these currently available lighting devices. Thus, the application of the LED lighting device driver can be more comprehensive.

Further, according to one embodiment of the present invention, the current ripple reduction circuit of the LED lighting device driver can be realized by a filter capacitor, a flicker reduction circuit or other similar circuits. Therefore, the circuit design thereof can be flexible, which can effectively conform to actual requirements.

Moreover, according to one embodiment of the present invention, the current ripple reduction circuit of the LED lighting device driver can be integrated with other functional circuits. Therefore, the performance of the LED lighting device can be further enhanced in order to satisfy the requirements of different users. As described above, the LED lighting device driver according to the embodiments can definitely achieve great technical effects.

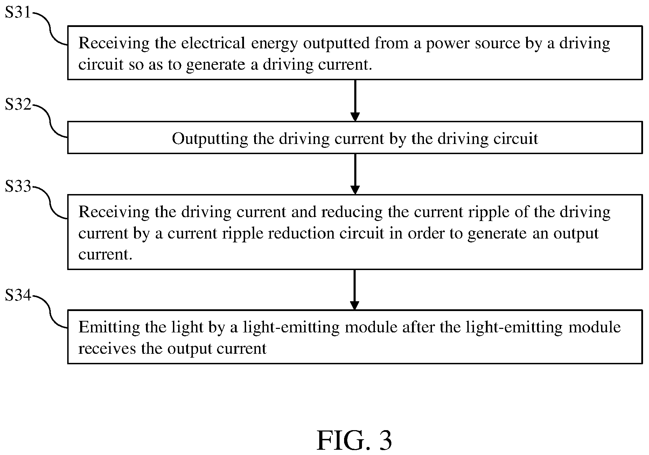

Please refer to FIG. 3, which is a flow chart of a method for improving luminous performance of a LED lighting device in accordance with one embodiment of the present invention. As shown in FIG. 3, the method for improving luminous performance of the LED lighting device according to the embodiment includes the following steps:
Step S31: receiving the electrical energy outputted from a power source by a driving circuit so as to generate a driving current.
Step S32: outputting the driving current by the driving circuit.
Step S33: receiving the driving current and reducing the current ripple of the driving current by a current ripple reduction circuit in order to generate an output current.
Step S34: emitting the light by a light-emitting module after the light-emitting module receives the output current.

The embodiment just exemplifies the present invention and is not intended to limit the scope of the present invention; any equivalent modification and variation according to the spirit of the present invention is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to one embodiment of the present invention, the LED lighting device driver includes a current ripple reduction circuit, which can effectively decrease or filer out the current ripple of the driving current outputted by the driving circuit thereof so as to generate the output current for driving the light-emitting module thereof. Accordingly, the luminous performance of the LED lighting device driver can be dramatically improved with a view to achieve energy saving and satisfy environmental protection requirements.

Also, according to one embodiment of the present invention, the LED lighting device driver can be applied to various currently available LED lighting devices in order to enhance the luminous performances of these currently available lighting devices. Thus, the application of the LED lighting device driver can be more comprehensive.

Further, according to one embodiment of the present invention, the current ripple reduction circuit of the LED lighting device driver can be realized by a filter capacitor, a flicker reduction circuit or other similar circuits. Therefore, the circuit design thereof can be flexible, which can effectively conform to actual requirements.

Moreover, according to one embodiment of the present invention, the current ripple reduction circuit of the LED lighting device driver can be integrated with other functional circuits. Therefore, the performance of the LED lighting device can be further enhanced in order to satisfy the requirements of different users.

Furthermore, according to one embodiment of the present invention, the LED lighting device driver can greatly increase the luminous performance of the LED lighting device by a simple circuit design so as to achieve the desired technical effects without significantly increasing the cost thereof. Accordingly, the LED lighting device driver can have high commercial value.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A light-emitting diode (LED) lighting device driver with improved luminous performance comprising:
a driving circuit, configured to output a driving current; and
a current ripple reduction circuit, configured to receive the driving current and reduce a current ripple of the driving current to generate an output current in order to drive a light-emitting module.

2. The LED lighting device driver with improved luminous performance as claimed in claim 1, wherein the current ripple reduction circuit comprises a filter capacitor.

3. The LED lighting device driver with improved luminous performance as claimed in claim 1, wherein the current ripple reduction circuit is a flicker reduction circuit.

4. The LED lighting device driver with improved luminous performance as claimed in claim 1, wherein the light-emitting module is a LED or a LED array.

5. The LED lighting device driver with improved luminous performance as claimed in claim 1, wherein the driving circuit is connected to a power source and configured to receive an electrical energy outputted from the power source in order to generate the driving current.

6. A method for improving luminous performance of a LED lighting device comprising:
outputting a driving current by a driving circuit;
receiving the driving current and reducing a current ripple of the driving current by a current ripple reduction circuit in order to generate an output current; and emitting a light by a light-emitting module after the light-emitting module receives the output current.

7. The method for improving luminous performance of the LED lighting device as claimed in claim 6, further comprising:
receiving an electrical energy outputted from a power source by the driving circuit so as to generate the driving current.

8. The method for improving luminous performance of the LED lighting device as claimed in claim 6, wherein the current ripple reduction circuit comprises a filter capacitor.

9. The method for improving luminous performance of the LED lighting device as claimed in claim 6, wherein the current ripple reduction circuit is a flicker reduction circuit.

10. The method for improving luminous performance of the LED lighting device as claimed in claim 6, wherein the light-emitting module is a LED or a LED array.
